# EUROPEAN PATENT SPECIFICATION

(11) **EP 3 994 397 B1**
(45) Date of publication and mention of the grant of the patent: **30.08.2023**
(21) Application number: 20739294.5
(22) Date of filing: 02.07.2020
(51) Int. Cl.: F24F 1/03, F24F 13/20, F24F 7/08, F24F 12/00, F24F 110/68

(54) **VENTILATION DEVICE**
BELÜFTUNGSVORRICHTUNG
DISPOSITIF DE VENTILATION

(30) Priority: 05.07.2019 IT 201900010956
(43) Date of publication of application: 11.05.2022
(73) Proprietor: Radoff S.r.l., 07023 Calangianus (SS) (IT)
(72) Inventor: CASSITTA, Domenico, 07029 TEMPIO PAUSANIA (OT) (IT); CASSITTA, Giovanni Piero, 07029 TEMPIO PAUSANIA (OT) (IT)
(74) Representative: Baldi, Claudio
(86) International application number: PCT/EP2020/068615
(87) International publication number: WO 2021/004867

(56) References cited:
- EP-A1- 3 045 831
- EP-A1- 3 190 347
- WO-A1-2019/050484
- GB-A- 2 194 632
- US-A1- 2013 137 360

## Description

The present invention for industrial patent relates to a device used for treating the air in a confined space, and in particular for reducing the concentration of radon in a confined space.

As it is known, radon is a natural noble gas formed by the alpha decay of radium that is generated by the alpha decay of uranium, which is diffusely present in the earth's crust.

The detrimental effects of radon are produced by the polonium and the bismuth that are generated by the radioactive decay of radon. If inhaled, polonium and bismuth are deposited in the bronchial epithelium, releasing significant doses of alpha radiations that may determine the onset of lung cancer and leukemia.

The main source of radon gas is the ground, from which radon is released and dispersed in the environment. Radon accumulates in confined places and is dangerous for the human health. In particular, the basement floors of buildings may have a very high concentration of radon because of the direct penetration of radon from the ground and because they are generally poorly ventilated.

In a lesser extent, other sources of radon gas can be water and building materials, especially if of volcanic origin, such as tuff or granites.

The higher the concentration of radon in a confined space, the higher the risk of contracting cancer will be. Moreover, it must be noted that at standard temperature and pressure, radon is an odorless, colorless gas and is therefore impossible to detect its presence without using a specific device.

The devices that are used to determine the concentration of radon in the air can be of active type, being based on detectors that need to be powered during the measurement, or passive type, being based on detectors that do not need to be powered. Active devices measure the concentration of radon in the space in real time, whereas passive devices measure the concentration of radon only after a measurement time. Generally, ventilation is used to avoid the accumulation of radon in a confined space.

Ventilation can be obtained in a natural way (by simply opening windows and doors) or in a forced way using ventilation devices, such as fans.

Natural ventilation is often an insufficient or ineffective solution; moreover, it involves significant costs for the heating or cooling of the confined space.

Forced ventilation is usually performed by a device that comprises:
- a first tube that comprises an inlet suitable for being disposed in a confined space in order to introduce contaminated air in the first tube, and an outlet suitable for being disposed outside the confined space in order to discharge the contaminated air outside the confined space;
- a second tube that comprises an inlet suitable for being disposed outside the confined space in order to introduce clean air in the second tube, and an outlet suitable for being disposed in the confined space in order to introduce clean air in the confined space;
- fans disposed in the first tube and in the second tube for the passage of air inside the tubes;
- a detector to detect the concentration of radon in the air in the confined space, and
- a control unit connected to the fans and to the sensors in such a way to activate the fans according to the concentration of radon in the air.

Such a device of the prior art is impaired by the fact that it is cumbersome and complicated to install. In fact, being composed of two separate tubes, two through holes must be drilled in a wall that defines the confined space, and complicated, expensive installation works are necessary. Moreover, such a device is not versatile and does not adjust to walls with different thickness.

Furthermore, being composed of two separate modules (an air extraction module and an air delivery module), the device of the prior art is impaired by low efficiency, high energy consumption and frequent maintenance operations.

EP3045831 discloses a compact ventilation system that solves the problem of maintaining a certain microclimate in closed premises and with minimum energy consumption. The device has a tubular body, in which a filter, a three-volume heat exchanger with a heater and a first fan and a second fan are mounted. Both fans operate separately: the first fan when introducing air and the second fan when discharging air from the room.

The purpose of the present invention is to overcome the drawbacks of the prior art by disclosing a device for treating the air in a confined space that is efficient and practical, with low-energy consumption.

An additional purpose is to disclose such a device for the treatment of air in a confined space that is not cumbersome, is easy to install, versatile and capable of adjusting to different wall thickness.

These purposes are achieved according to the invention with the characteristics that are listed in the appended independent claim 1.

Advantageous embodiments appear from the dependent claims.

The device according to the invention is defined by the independent claim 1.

The advantages of the device according to the invention are manifest. The provision of two fans at the two ends of the device makes it possible to simultaneously extract air from the confined space and introduce air in the confined space, without mixing the air flows.

For the sake of clarity, the description of the device according to the invention continues with reference to the attached drawings, which have a merely illustrative, not limiting value, wherein:
Fig. 1 is an axial sectional view of the device according to the invention, which shows an air flow from the inside to the outside;
Figs. 1A and 1B are two enlarged views of two details of Fig. 1, which are respectively enclosed in the circles A and B of Fig. 1;
Fig. 2 is an axial sectional view of a first module of the device of Fig. 1;
Fig. 3 is an axial sectional view of a second module of the device of Fig. 1;
Figs. 4 and 5 are two cross-sectional views taken along the planes IV-IV and V-V of Fig. 2;
Fig. 6 is a cross-sectional view taken along the sectional plane VI-VI of Fig. 1;
Fig. 7 is an axial view taken along the sectional plane VII-VII of Fig. 6, which shows the air flow from the outside to the inside;
Figs. 7A and 7B are two enlarged views of two details of Fig. 7, which are respectively enclosed in the circles A and B of Fig. 7;
Fig. 8 is a block diagram that shows the electrical connections of the device of the invention.

With reference to the Figures, the device according to the invention is disclosed, which is generally indicated with reference numeral (100).

The device (100) is suitable for being installed in a wall that separates a confined indoor space from an outdoor space in order to reduce/eliminate the concentration of radon gas in the confined space.

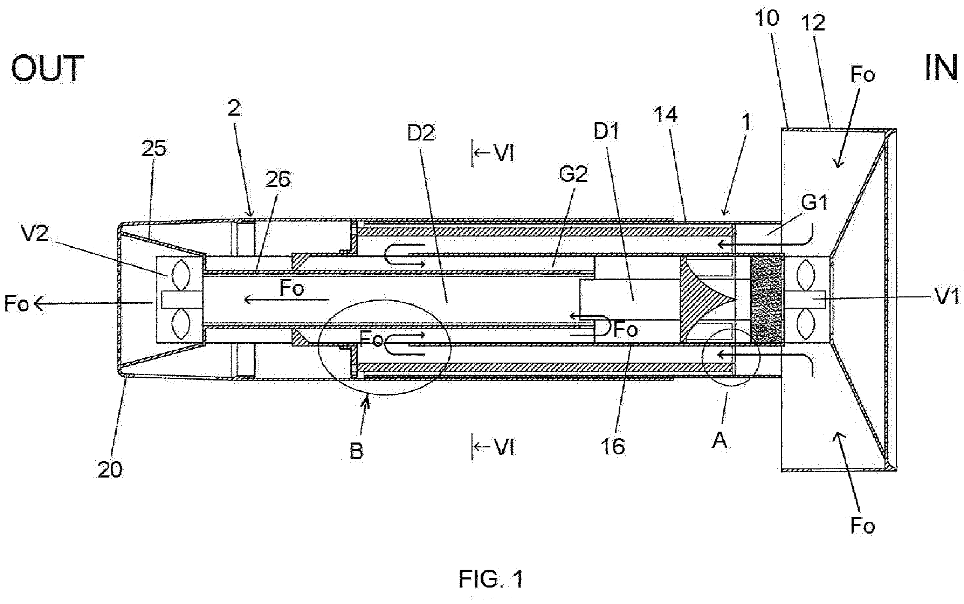

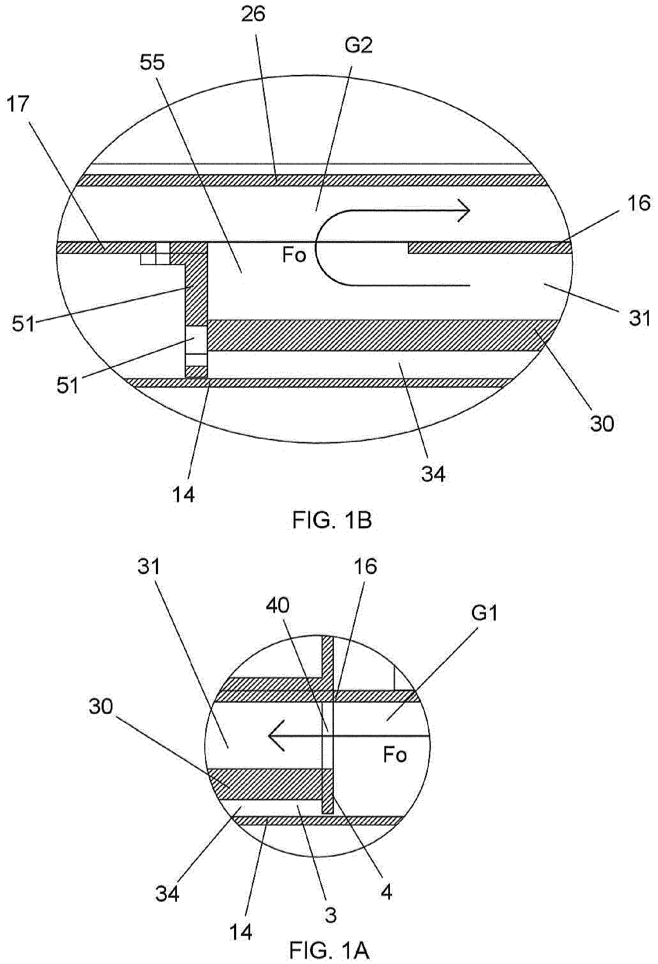

With reference to Figs. 1, 2 and 3, the device (100) comprises a first module (1) and a second module (2) with tubular shape.

The first module (1) and the second module (2) are telescopically coupled in order to slide axially, varying the axial length of the device (100) according to the thickness of the wall where the device is installed.

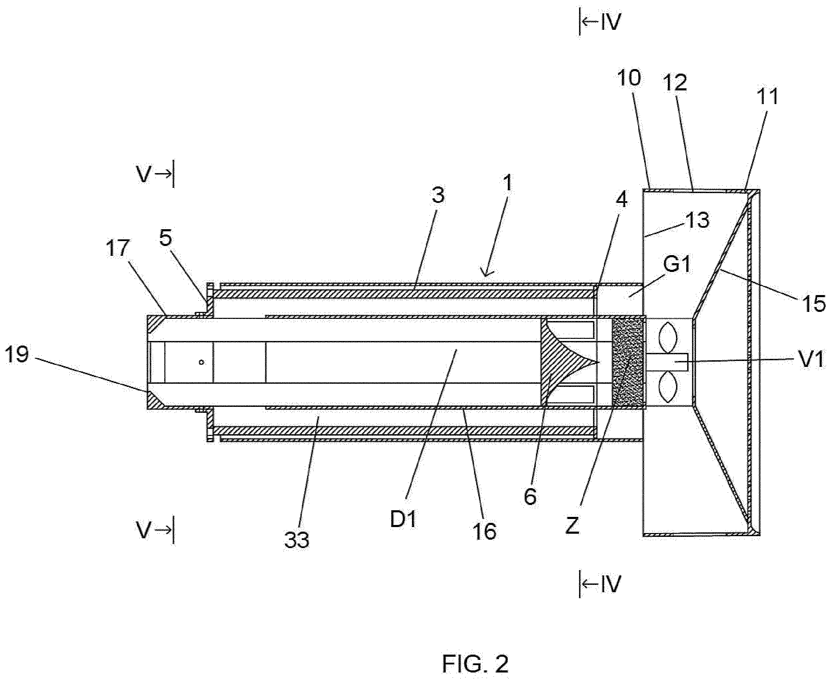

With reference to Fig. 2, the first module has an outlet (10) suitable for being disposed in the confined space. The outlet (10) has a substantially cylindrical shape with a lateral wall (11) provided with openings (12) that form a grille for the passage of air from the inside.

The outlet (10) has a back wall (13) joined to an external tube (14) that protrudes in rear position from the outlet. The diameter of the external tube (14) is lower than the diameter of the outlet (10) and the length of the external tube (14) is higher than the length of the outlet.

The outlet (10) has a front wall (15) with tapered shape that is joined to an internal tube (16). The internal tube (16) coaxially extends inside the outlet (10) and inside the external tube (14). The length of the internal tube (16) is lower than the length of the external tube (14).

The external tube (14) has a shank (17) that is disposed in rear position and has a lower diameter than the external tube. The shank (17) is joined to the external tube (14) by means of a back flange (5) that radially protrudes from the shank. The shank (17) has a collar (19) that protrudes inwards.

A first axial conduit (D1) is disposed in the internal tube (16) to house a first fan (V1), a filter (Z) and a conveyor (6).

The first fan (V1) is disposed at a front end of the internal tube (16) near the front wall (15) of the outlet. The first fan (V1) is configured in such a way to extract the air from the first axial conduit (D1) of the internal tube and eject the air inside from the front wall of the outlet (10).

The filter (Z) is disposed in front of the first fan (V1) and is suitable for filtering the air that is extracted by the first fan (V1) from the outside to the inside. Advantageously, the filter (Z) is an anti-particulate filter configured in such a way to filter particles with aerodynamic diameter lower than 2.5 µm. In this way, the air is filtered before being introduced in the confined space.

The conveyor (6) is disposed in front of the filter (Z). The conveyor has a tapered, conical or pyramidal shape with the point directed towards the filter (Z).

A first annular air gap (G1) is formed between the internal tube (16) and the external tube (14), wherein a heat exchanger (3) is disposed.

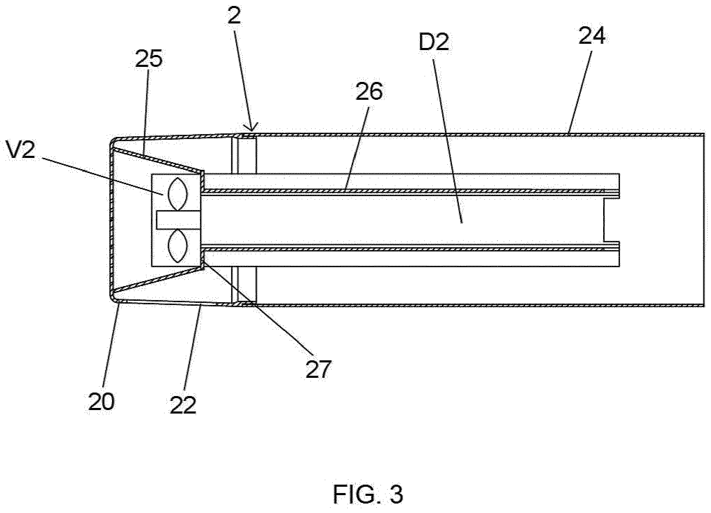

With reference to Fig. 3, the second module has an outlet (20) suitable for being disposed outside. The outlet (20) has a substantially cylindrical shape with a lateral wall provided with openings (22) that form a grille for the passage of air from the outside.

The outlet (20) is connected to an external tube (24) that has the same diameter as the outlet. The internal diameter of the external tube (24) of the second module is slightly higher than the external diameter of the external tube (14) of the first module, in such a way that the external tube of the first module can be inserted in the external tube of the second module and the two tubes can slide one on top of the other.

The outlet (20) of the second module has a rear end that is folded like a "U" and is joined to a shank (25) with tapered shape that is coaxially disposed inside the outlet (20). The shank (25) is connected to an internal tube (26) by means of a wall (27) that radially protrudes from the internal tube (26). The internal tube (26) coaxially extends inside the external tube (24). The length of the internal tube (26) is lower than the length of the external tube (24). A second axial conduit (D2) is disposed inside the internal tube (26).

The external diameter of the internal tube (26) of the second module is lower than the internal diameter of the internal tube (16) of the first module. In view of the above, the internal tube (26) of the second module is inserted in the internal tube (16) of the first module and a second annular air gap (G2) is formed between the two internal tubes (26, 16). The collar (19) of the shank of the first module slides on the internal tube (26) of the second module in such a way to axially center the internal tube (26) of the second module.

A second fan (V2) is disposed inside the shank (25) of the second module near the rear end of the internal tube (26). The second fan (V2) is configured in such a way to extract air from the second axial conduit (D2) of the internal tube of the second module and eject the extracted air outside from the shank (25).

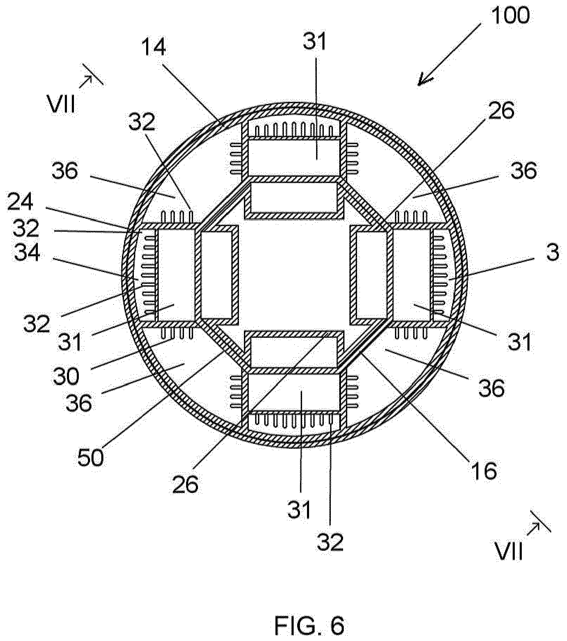

With reference to Fig. 6, the heat exchanger (3) comprises a plurality of profiles (30), which are preferably made of aluminum, fixed to the internal tube (16) of the first module. Each profile (30) has a substantially U-shaped cross-section that is joined to the internal tube (16) of the first module in such a way to define first conduits (31) for the passage of air from the inside to the outside.

Each profile (30) is provided with tabs (32) that protrude outwards from the profile (30). The function of the tabs is to maximize the heat exchange of the air that flows outside the profile.

The profile (30) can be also fixed to the external tube (14) of the first module by means of extensions (33), in such a way to define an air gap (34) between the profile and the external tube (14). The tabs (32) are disposed in the air gap (34) because the air from the outside that passes in the air gap (34) must be exposed to heat exchange. In such a case, the profile (30) can have an H-shaped cross-section.

Moreover, the profiles (30) are angularly spaced in such a way that a second conduit (36) is provided between two profiles (30) for the passage of air from the outside to the inside.

The internal tube (16) of the first module has an octagonal shape in cross-section. In this way, the heat exchanger (3) comprises four profiles (30) disposed on four non-adjacent sides of the internal tube (16) and angularly equally spaced by 90°. Therefore, four first conduits (31) are provided for the passage of air from the inside to the outside and four second conduits (36) are provided for the passage of air from the outside to the inside.

With reference to Fig. 2, the heat exchanger (3) is disposed between the back flange (5) and a front flange (4). The front flange (4) and the back flange (5) act as air distributors.

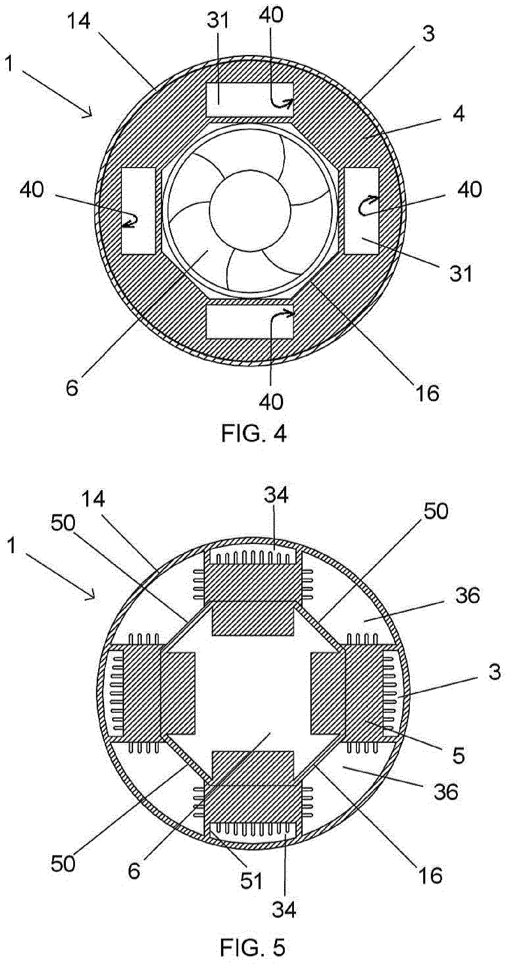

With reference to Figs. 4, 1A and 7A, the front flange (4) is provided with openings (40) in correspondence of the first conduits (31) of the heat exchanger and obstructs the second conduits (36) and the air gaps (34) of the heat exchanger. In view of the above, the air from the inside that hits the front flange (4) is exclusively introduced in the first conduits (31) of the heat exchanger.

With reference to Figs. 5, 1B and 7B, the back flange (5) is provided with openings (50, 51) in correspondence of the second conduits (36) and of the air gaps (34) of the heat exchanger and obstructs only the first conduits (31) of the heat exchanger. In view of the above, the air from the outside that hits the back flange (5) is introduced in the second conduits (33) and in the air gaps (34) of the heat exchanger and is not introduced in the first conduits (31).

With reference to Fig. 1B, it must be noted that the back end of the internal tube (16) of the first module is distant from the shank (17). Communication conduits (55) are obtained in the back flange (5) to put the first conduits (31) of the heat exchanger in communication with the second air gap (G2) between the internal tube (16) of the first module and the internal tube (26) of the second module.

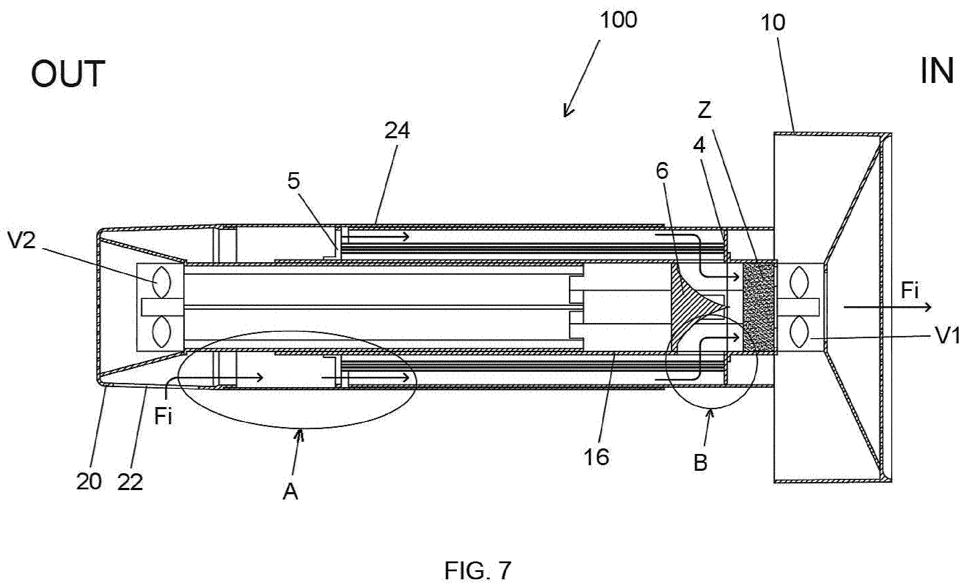

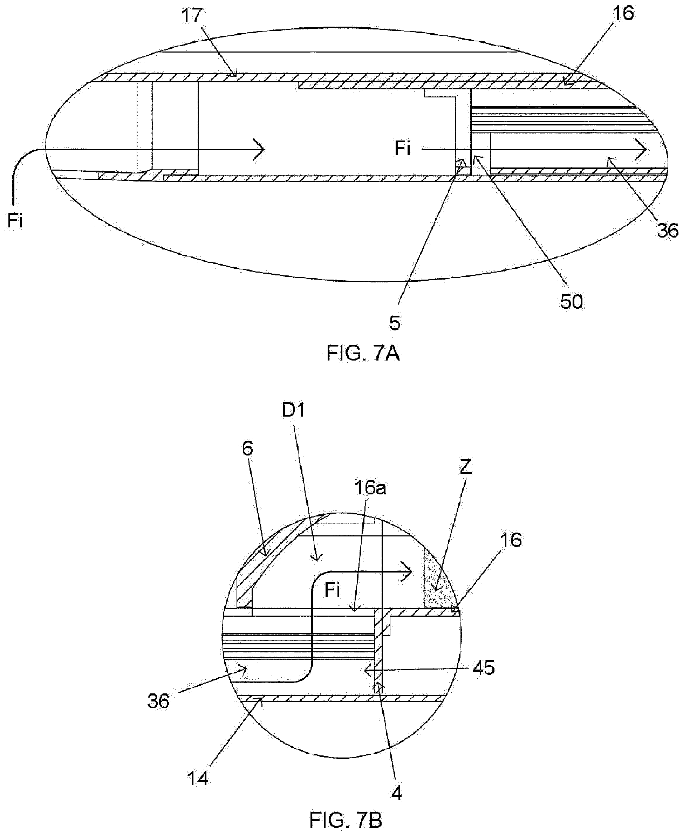

With reference to Fig. 7B, openings (16a) are obtained in the internal tube (16) of the first module, in correspondence of the front flange (4) between the filter (Z) and the conveyor (6). Communication conduits (45) are obtained in the front flange (4) to put in communication the second conduits (36) of the heat exchanger with the openings (16a) of the internal tube of the first module in order to let the air from the outside flow towards the first axial conduit (D1) between the conveyor (6) and the filter (Z), in such a way that the conveyor (6) conveys the air towards the filter (Z).

Figs. 1, 1A and 1B describe the air flow from the inside to the outside that is obtained by actuating the second fan (V2). Such an air flow is illustrated with arrows and indicated as Fo.

The air from the inside is introduced in the openings (12) of the outlet (10) of the first module and reaches the first air gap (G1) between the internal tube (16) and the external tube (14) of the first module, hitting the front flange (4). Then, the air is introduced in the openings (40) of the front flange, flows in the first conduits (31) of the heat exchanger, passes through the communication conduits (55) of the back flange (5) and is introduced in the second air gap (G2) between the internal tube (16) of the first module and the internal tube (26) of the second module, following an S-shaped winding trajectory to reach the first axial conduit (D1) of the first module. The conveyor (6) prevents the air from going towards the filter (Z).

The air that is contained in the first axial conduit (D1) of the first module is extracted in the second axial conduit (D2) of the second module from the second fan (V2) and is discharged outside from the shank (25).

Figs. 7, 7A and 7B describe the air flow from the outside to the inside that is obtained by actuating the first fan (V1). Such an air flow is illustrated with arrows and indicated as Fi.

The air from the outside is introduced in the openings (22) of the outlet (20) of the second module and hits the back flange (5). Then, the air is introduced in the openings (50, 51) of the back flange and flows in the second conduits (36) and in the air gaps (34) of the heat exchanger.

The air that flows in the second conduits (36) of the heat exchanger reaches the communication conduits (45) of the front flange and passes through the openings (16a) of the internal tube (16) of the first module, it being introduced in the first axial conduit (D1) of the first module, between the conveyor (6) and the filter (Z). The conveyor (6) conveys the air towards the filter (Z).

The air that is contained in the first axial conduit (D1) of the first module is extracted by the first fan (V1) and is introduced inside, it being discharged from the back wall of the outlet (10) of the first module.

It must be noted that the air flow (Fi) from the outside to the inside is a countercurrent flow with respect to the air flow (Fo) from the inside to the outside. In this way, the heat exchanger (3) operates with maximum efficiency, permitting a thermal exchange between the air from the inside and the air from the outside.

The function of the first fan (V1) is to introduce an air flow (Fi) from the outside inside the confined space. The function of the second fan (V2) is to extract an air flow (Fo) from the confined space and discharge the air flow (Fo) outside. The trajectories followed by the two air flows are shown in Figs. 1 and 7. When the fans (V1) and (V2) are in operation, the device (100) simultaneously produces the two air flows (Fi, Fo) that are always separated.

It must be considered that the front flange (4) and the back flange (5) act as air distributors. The front flange (4) conveys the air flow (Fo) inside the profiles (30) of the heat exchanger; whereas the back flange (5) conveys the air flow (Fi) outside the profiles (30).

The function of the heat exchanger (3) is to absorb heat from the air flow (Fo) from the inside and release heat to the air flow (Fi) from the outside. By means of the heat exchange (3), the air that is introduced in the confined space does not determine any sudden temperature change in the confined space.

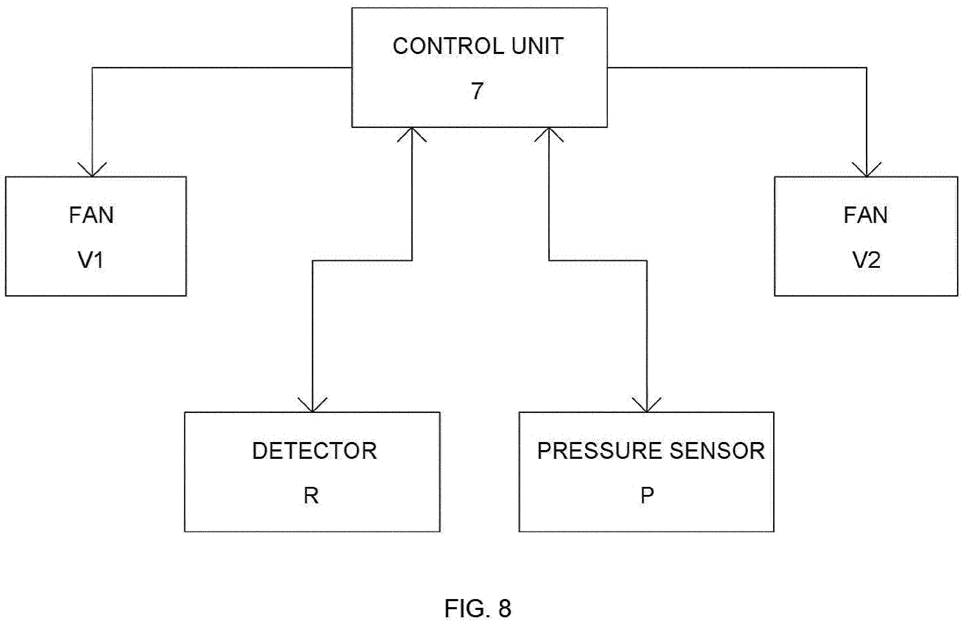

With reference to Fig. 8, the device (100) comprises a radon detector (R) and a control unit (7) connected to the radon detector (R). The radon detector (R) is independent and separated from the air extraction/delivery system. In view of the above, the radon detector (R) can be installed anywhere in the confined space to detect the presence of radon gas in the confined space.

The radon detector (R) may be any active measurement device, such as a scintillation cell, a solid state detector or an ionization chamber. The use of an active measurement device provides the real time monitoring of the concentration of radon gas in the confined space.

The control unit (7) is configured in such a way to receive information on the concentration of radon gas in the confined space from the radon detector (R). The control unit (7) comprises a comparator (70) to compare the concentration of radon gas detected by the radon detector (R) with a threshold value stored in the comparator (70).

The control unit (7) is connected to the fans (V1, V2) that are actuated according to the concentration of radon gas detected by the radon detector (R).

The control unit (7) is configured in such a way to simultaneously activate and move the fans (V1, V2) when the concentration of radon is higher than the threshold value.

More precisely, the control unit (7) is configured in such a way to activate the second fan (V2) in order to extract the air from the inside, and to activate the first fan (V1) in order to introduce air in the confined space when the radon detector (R) detects a concentration of radon gas in the confined space that is higher than the threshold value.

On the contrary, the control unit (7) deactivates the fans (V1, V2) when the radon detector (R) detects a concentration of radon gas in the confined space that is lower than or equal to the threshold value.

The control unit (7) is configured in such a way to activate the fans (V1, V2) at a variable revolutional speed according to the incoming/outgoing air flow to be provided in order to reduce the initial concentration of radon gas. In any case, the control unit (7) is configured in such a way to activate the first fan (V1) at a higher revolutional speed than the second fan (V2). In view of the above, the air flow (Fi) provided by the first fan (V1) from the outside to the inside is higher than the air flow (Fi) provided by the second fan (V2) from the inside to the outside.

The control unit (7) is configured in such a way to adjust the speed of the first fan (V1) in order to increase the pressure in the confined space.

The introduction in the confined space of an air flow higher than the air flow extracted from the confined space determines a pressure increase in the confined space that limits the rise of radon gas from the ground (the so-called "chimney effect") and prevents its accumulation in the confined space.

Advantageously, the device (100) comprises a pressure sensor (P) connected to the control unit (7) in such a way to send information on a pressure value of the air in the confined space to the control unit (7).

Optionally, the device (100) comprises other sensors, such as a humidity sensor, a temperature sensor and a PM10 and PM2.5 particulate sensor (not shown in the figures).

When the radon detector (R) detects a concentration of radon gas that is higher than the threshold value stored in the comparator (70) of the control unit (7), the following actions are simultaneously performed:
- The first fan (V1) is activated to produce an air flow (Fi) from the outside to the inside.
- The first fan (V1) extracts the air in correspondence of the openings (22) of the outlet of the second tube.
- Because of the provision of the back flange (5), the air flow (Fi) flows in the external portion of the profiles (30) of the heat exchanger (3), heating the profiles (30).
- The air flow (Fi) flows in the first axial conduit (D1) of the first module through the communication conduits (45) of the front flange (4) and is conveyed towards the filter (Z) by means of the conveyor (6).
- The first fan (V1) introduces the air flow (Fi) in the confined space through the front wall of the outlet (10) of the first module.
- The second fan (V2) is activated to produce an air flow (Fo) from the inside to the outside, with Fo< Fi.
- The second fan (V2) extracts the air in correspondence of the openings (12) of the outlet of the first module.
- Because of the provision of the front flange (4), the air flow (Fo) flows in the first conduits (31) of the profiles (30) of the heat exchanger (3), releasing the heat.
- The air flow (Fo) is conveyed in the second air gap (G2) between the internal tube (16) of the first module and the internal tube (26) of the second module through the communication conduits (55) of the back flange and is conveyed in the second axial conduit (D2) of the internal tube of the second module towards the second fan (V2).
- The second fan (V2) releases the air flow (Fo) outside through the shank (25) of the outlet of the second module.

The two air flows (Fo and Fi) are never crossed during the operation of the fans (V1, V2).

The control unit (7) turns off the fans (V1, V2) when the radon detector (R) detects a concentration of radon gas lower than or equal to the threshold value stored in the comparator (70) of the control unit (7).

During the introduction of the air in the inside from the outside, the speed of the first fan (V1) is adjusted in such a way to increase the internal pressure. In fact, high pressure values hinder the formation of the radon gas.

The device (100) is more compact than a device of the prior art because it comprises two modules (1, 2) that are coaxially disposed one inside the other, instead of two separate modules, thus simplifying the installation compared to the prior art. An innovative aspect of the device is represented by the provision of the particulate filter (Z) that improves the salubrity of the confined space and avoids the formation of a cluster between particulates and radon particles, which is detrimental for the human health.

## Claims

1. Device (100) for treating the air in a confined space, comprising:
- a first module (1) with an outlet (10) suitable for being disposed in a confined space, an external tube (14) that protrudes in rear position from the outlet, and an internal tube (16) axially disposed inside the outlet and inside the external tube and defining a first axial conduit (D1); said outlet being provided with openings (12) for introducing air from the inside towards a first air gap (G1) between the internal tube and the external tube of the first module;
- a second module (2) with an outlet (20) suitable for being disposed outside said confined space, an external tube (24) that protrudes frontally from the outlet, a shank (25) disposed inside the outlet and an internal tube (26) that protrudes frontally from the shank, axially disposed inside the external tube and defining a second axial conduit (D2); said outlet (20) of the second module being provided with openings (22) for introducing air from the outside towards an air gap between the internal tube and the external tube of the second module;
- a first fan (V1) disposed at a front end of the first axial conduit (D1) of the internal tube of the first module in order to extract air from the first axial conduit (D1) and introduce air in the confined space;
- a second fan (V2) disposed in said shank (25) of the second module in order to extract air from said second conduit (D2) of the internal tube of the second module and discharge the air outside;
- a heat exchanger (3) disposed in said first air gap (G1) of the first module, said heat exchanger (3) being provided with first conduits (31) for the passage of air from the inside to the outside, and with second conduits (36) for the passage of air from the outside to the inside;
a filter (Z) disposed in said first axial conduit (D1) of the first module, in front of the first fan, in order to filter the air introduced in the confined space;
- a radon detector (R) suitable for detecting the presence of radon gas in said confined space; and
- a control unit (7) connected to said radon detector (R) to receive information on the concentration of radon gas in said confined space; said control unit (7) comprising a comparator (70) to compare the concentration of radon gas detected by the radon detector (R) with a threshold value stored in the comparator (70); said control unit (7) being connected to said fans (V1, V2) in order to activate them when the radon detector (R) detects a concentration of radon gas in the confined space that is higher than the threshold value of the comparator (70);
wherein said first module (1) and second module (2) are telescopically coupled, the external tube (24) of the second module slides on the external tube (14) of the first module, and the internal tube (26) of the second module is disposed inside the internal tube (16) of the first module, forming a second air gap (G2), in such a way that the two modules (1, 2) can slide in order to adjust to the thickness of a wall that separates the inside from the outside and wherein said device is installed.

2. The device (100) of claim 1, comprising a conveyor (6) disposed in said first axial conduit (D1) in front of the filter (Z); said conveyor having a tapered shape with a point directed towards the filter (Z) in order to convey the air from the outside towards the filter.

3. The device (100) of claim 1 or 2, wherein said first module comprises a shank (17) that protrudes in rear position from the external tube and has a collar (19) that protrudes in lower position to slide on the internal tube (26) of the second module.

4. The device (100) of any one of the preceding claims, wherein said heat exchanger (3) comprises a plurality of profiles (30) disposed on said internal tube (16) of the first module where said first conduits (31) of the heat exchanger are defined, said profiles (30) being provided with outwardprotruding tabs (32) and said second conduits (36) of the heat exchanger being defined outside said profiles.

5. The device (100) of claim 4, wherein said internal tube (16) of the first module has an octagonal section and said heat exchanger (3) comprises four first conduits (31) on four non-adjacent sides of the internal tube (16) of the first module, and four second conduits (36) disposed at the same angular distance on additional four non-adjacent sides of the internal tube (16) of the first module.

6. The device (100) of any one of the preceding claims, comprising a front flange (4) and a back flange (5), respectively disposed at a front end and at a back end of said heat exchanger (3); said front flange (4) allowing an air flow towards said first conduits (31) and obstructing an air flow towards said second conduits (36) of the heat exchanger; said back flange (5) allowing an air flow towards said second conduits (36) and obstructing an air flow towards said first conduits (31) of the heat exchanger.

7. The device (100) of claim 6, wherein said back flange (5) is provided with communication conduits (55) that put said first conduits (31) of the heat exchanger in communication with said second air gap (G2) between the internal tube (16) of the first module and the external tube (14) of the second module, and said front flange (4) is provided with communication conduits (45) that put said second conduits (36) of the heat exchanger in communication with openings (16a) of the internal tube of the first module in order to introduce air in said first axial conduit (D1) of the first module.

8. The device (100) of any one of the preceding claims, comprising a pressure sensor (6) connected to the control unit (7) in order to send information on a pressure value of the air in the confined space; said control unit (7) being suitably configured in such a way to adjust the speed of the first fan (V1) in such a way to be higher than the speed of the second fan (V2) in order to increase the pressure in the confined space.

9. The device (100) of any one of the preceding claims, comprising a humidity sensor, a thermal sensor and a PM10 and PM2.5 particulate sensor.

## Patentansprüche

1. Vorrichtung (100) zur Aufbereitung von Luft in einem geschlossenen Raum, umfassend:
- ein erstes Modul (1) mit einem Auslass (10), der dazu bestimmt ist, innerhalb eines geschlossenen Raumes angeordnet zu werden, ein Außenrohr (14), das rückseitig aus dem Auslass vorsteht, und ein Innenrohr (16), das axial in dem Auslass und in dem Außenrohr angeordnet ist und einen ersten axialen Kanal (D1) definiert; wobei der Auslass Öffnungen (12) für den Lufteintritt von innen in Richtung eines ersten Luftspalts (G1) zwischen dem Innenrohr und dem Außenrohr des ersten Moduls aufweist;
- ein zweites Modul (2) mit einem Auslass (20), der dazu bestimmt ist, außerhalb des geschlossenen Raumes angeordnet zu werden, ein Außenrohr (24), das vorderseitig aus dem Auslass vorsteht, einen Schaft (25), der in dem Auslass angeordnet ist, und ein Innenrohr (26), das vorderseitig aus dem Schaft vorsteht, axial in dem Außenrohr angeordnet ist und einen zweiten axialen Kanal (D2) definiert; wobei der Auslass (20) des zweiten Moduls Öffnungen (22) für den Lufteintritt von außen in Richtung eines Luftspalts zwischen dem Innenrohr und dem Außenrohr des zweiten Moduls aufweist;
- ein erstes Gebläse (V1), das an einem vorderen Endabschnitt des ersten axialen Kanals (D1) des Innenrohrs des ersten Moduls angeordnet ist, um Luft aus dem ersten axialen Kanal (D1) anzusaugen und in den geschlossenen Raum einzuführen;
- ein zweites Gebläse (V2), das in dem Schaft (25) des zweiten Moduls angeordnet ist, um Luft aus dem zweiten Kanal (D2) des Innenrohrs des zweiten Moduls anzusaugen und nach außen auszustoßen;
- einen Wärmetauscher (3), der in dem ersten Luftspalt (G1) des ersten Moduls angeordnet ist, wobei der Wärmetauscher (3) erste Kanäle (31) für den Luftstrom von innen nach außen und zweite Kanäle (36) für den Luftstrom von außen nach innen aufweist;
- einen Filter (Z), der in dem ersten axialen Kanal (D1) des ersten Moduls gegenüber dem ersten Gebläse angeordnet ist, um die ins Innere des geschlossenen Raumes eingeführte Luft zu filtern;
- einen Radonsensor (R), der geeignet ist, das Vorhandensein von Radon im Innern des geschlossenen Raumes zu erfassen; und
- eine Steuereinheit (7), die mit dem Radonsensor (R) verbunden ist, um Informationen über die Konzentration von Radon in dem geschlossenen Raum zu empfangen; wobei die Steuereinheit (7) einen Komparator (70) umfasst, um die von dem Radonsensor (R) erfasste Radonkonzentration mit einem Schwellenwert zu vergleichen, der in dem Komparator (70) gespeichert ist; wobei die Steuereinheit (7) mit den Gebläsen (V1, V2) verbunden ist, um diese zu aktivieren, wenn der Radonsensor (R) eine Radonkonzentration in dem geschlossenen Raum erfasst, die über dem Schwellenwert des Komparators (70) liegt;
wobei das erste Modul (1) und das zweite Modul (2) teleskopisch miteinander gekoppelt sind, das Außenrohr (24) des zweiten Moduls auf dem Außenrohr (14) des ersten Moduls gleitet und das Innenrohr (26) des zweiten Moduls im Innern des Innenrohrs (16) des ersten Moduls angeordnet ist und einen zweiten Luftspalt (G2) bildet, so dass die zwei Module (1, 2) gleiten können, um sich an die Dicke einer Wand anzupassen, die den Innenraum vom Außenraum trennt, in dem die Vorrichtung installiert ist.

2. Vorrichtung (100) nach Anspruch 1, umfassend eine Fördereinrichtung (6), die in dem ersten Kanal (D1) gegenüber dem Filter (Z) angeordnet ist; wobei die Fördereinrichtung eine sich verjüngende Form mit einer zum Filter (Z) gerichteten Spitze aufweist, um Luft von außen in Richtung des Filters zu fördern.

3. Vorrichtung (100) nach Anspruch 1 oder 2, wobei das erste Modul einen Schaft (17) umfasst, der rückseitig aus dem Außenrohr vorsteht und einen Bund (19) aufweist, der unten vorsteht, um auf dem Innenrohr (26) des zweiten Moduls zu gleiten.

4. Vorrichtung nach einem der vorstehenden Ansprüche, wobei der Wärmetauscher (3) eine Vielzahl von Profilen (30) umfasst, die auf dem Innenrohr (16) des ersten Moduls angeordnet sind und in denen die ersten Kanäle (31) des Wärmetauschers (3) definiert sind, wobei die Profile (30) Rippen (32) aufweisen, die nach außen vorstehen und wobei die zweiten Kanäle (36) des Wärmetauschers außerhalb der Profile definiert sind.

5. Vorrichtung (100) nach Anspruch 4, wobei das Innenrohr (16) des ersten Moduls einen achteckigen Querschnitt aufweist und der Wärmetauscher (3) vier erste Kanäle (31) auf vier nicht benachbarten Seiten des Innenrohrs (16) des ersten Moduls und vier zweite Kanäle (36) umfasst, die gleichwinklig voneinander beabstandet, auf anderen vier, nicht benachbarten Seiten des Innenrohrs (16) des ersten Moduls angeordnet sind.

6. Vorrichtung nach einem der vorstehenden Ansprüche, umfassend einen vorderen Flansch (4) und einen hinteren Flansch (5), die jeweils an einem vorderen und einem hinteren Endabschnitt des Wärmetauschers (3) angeordnet sind; wobei der vordere Flansch (4) einen Luftstrom in Richtung der ersten Kanäle (31) erlaubt und einen Luftstrom in Richtung der zweiten Kanäle (36) des Wärmetauschers unterbindet; wobei der hintere Flansch (5) einen Luftstrom in Richtung der zweiten Kanäle (36) erlaubt und einen Luftstrom in Richtung der ersten Kanäle (31) des Wärmetauschers unterbindet.

7. Vorrichtung (100) nach Anspruch 6, wobei in dem hinteren Flansch (5) Verbindungskanäle (55) vorgesehen sind, die die ersten Kanäle (31) des Wärmetauschers mit dem zweiten Luftspalt (G2) zwischen dem Innenrohr (16) des ersten Moduls und dem Außenrohr (14) des zweiten Moduls verbinden und wobei in dem vorderen Flansch (4) Verbindungskanäle (45) vorgesehen sind, die die zweiten Kanäle (36) des Wärmetauschers mit den Öffnungen (16a) des Innenrohrs des ersten Moduls verbinden, um Luft in den ersten axialen Kanal (D1) des ersten Moduls einzuführen.

8. Vorrichtung (100) nach einem der vorstehenden Ansprüche, umfassend einen Drucksensor (P), der mit der Steuereinheit (7) verbunden ist, um Informationen über einen Luftdruckwert in dem geschlossenen Raum zu senden; wobei die Steuereinheit (7) konfiguriert ist, um die Geschwindigkeit des ersten Gebläses (V1) so zu regeln, dass sie höher als die Geschwindigkeit des zweiten Gebläses (V2) ist, um den Druck im Innern des geschlossenen Raumes zu erhöhen.

9. Vorrichtung (100) nach einem der vorstehenden Ansprüche, umfassend einen Feuchtigkeitssensor, einen Temperatursensor und einen Sensor für Feinstaub des Typs PM10 und PM2,5.

## Revendications

1. Dispositif (100) pour le traitement de l'air dans un environnement fermé, comprenant :
- un premier module (1) doté d'une embouchure (10) apte à être disposée dans un environnement fermé, une conduite externe (14) qui déborde en position arriérée de l'embouchure et une conduite interne (16) disposée axialement à l'intérieur de l'embouchure et à l'intérieur de la conduite externe et définissant une première conduite axiale (D1) ; ladite embouchure étant dotée d'ouvertures (12) pour introduire de l'air depuis l'intérieur vers une première fente d'aération (G1) qui se trouve entre la conduite interne et la conduite externe du premier module ;
- un second module (2) doté d'une embouchure (20) apte à être disposée à l'extérieur dudit environnement fermé, une conduite externe (24) qui déborde frontalement de l'embouchure, une tige (25) disposée entre l'embouchure et une conduite interne (26) qui déborde frontalement de la tige, disposée axialement à l'intérieur de la conduite externe et définissant une seconde conduite axiale (D2) ; ladite embouchure (20) du second module étant dotée d'ouvertures (22) pour introduire de l'air depuis l'extérieur vers une fente d'aération qui se trouve entre la conduite interne et la conduite externe du second module ;
- un premier ventilateur (V1) disposé à une extrémité antérieure de la première conduite axiale (D1) de la conduite interne du premier module de manière à aspirer l'air depuis la première conduite axiale (D1) et introduire de l'air dans l'environnement fermé ;
- un second ventilateur (V2) disposé dans ladite tige (25) du second module de manière à aspirer l'air depuis ladite seconde conduite (D2) de la conduite interne du second module et décharger l'air à l'extérieur ;
- un échangeur de chaleur (3) disposé dans ladite première fente d'aération (G1) du premier module, ledit échangeur de chaleur (3) étant doté de premières conduites (31) pour le passage de l'air depuis l'intérieur vers l'extérieur et de secondes conduites (36) pour le passage de l'air depuis l'extérieur vers l'intérieur ;
- un filtre (Z) disposé dans ladite première conduite axiale (D1) du premier module, en face du premier ventilateur, afin de filtrer l'air introduit dans l'environnement fermé ;
- un détecteur de radon (R) apte à détecter la présence de gaz radon dans ledit environnement fermé ; et
- une unité de commande (7) connectée au dit détecteur de radon (R) pour recevoir des informations sur la concentration de gaz radon dans ledit environnement fermé ; ladite unité de commande (7) comprenant un comparateur (70) pour comparer la concentration de gaz radon (R) détectée avec une valeur de seuil enregistrée dans le comparateur (70) ; ladite unité de commande (7) étant connectée aux dits ventilateurs (V1, V2) pour les activer lorsque le détecteur de radon (R) détecte une concentration de gaz radon dans l'environnement fermé supérieure à la valeur de seuil du comparateur (70) ;
où ledit premier module (1) et ledit second module (2) sont couplés de manière télescopique, la conduite externe (24) du second module coulisse sur la conduite externe (14) du premier module, et la conduite interne (26) du second module est disposée à l'intérieur de la conduite interne (16) du premier module, en formant une seconde fente d'aération (G2), de manière telle que les deux modules (1, 2) puissent coulisser un par rapport à l'autre afin de régler l'épaisseur de la paroi qui sépare l'environnement intérieur de l'extérieur et où ledit dispositif est installé.

2. Dispositif (100) selon la revendication 1, comprenant un convoyeur (6) disposé dans ladite première conduite axiale (D1) en face du filtre (Z) ; ledit convoyeur ayant une forme conique avec une pointe orientée vers le filtre (Z) pour convoyer l'air depuis l'extérieur vers le filtre.

3. Dispositif (100) selon la revendication 1 ou 2, où ledit premier module comprend une tige (17) qui déborde en position arriérée de la conduite externe et a un collier (19) qui déborde en position inférieure pour coulisser dans ladite conduite interne (26) du second module.

4. Dispositif (100) selon l'une quelconque des revendications précédentes, où ledit échangeur de chaleur (3) comprend une pluralité de profilés (30) disposés sur ladite conduite interne (16) du premier module, où lesdites premières conduites (31) de l'échangeur de chaleur sont définies, lesdits profilés (30) étant dotés de languettes (32) qui débordent vers l'extérieur et lesdites secondes conduites (36) de l'échangeur de chaleur étant définies à l'extérieur des dits profilés.

5. Dispositif (100) selon la revendication 4, où ladite conduite interne (16) du premier module a une section octogonale et ledit échangeur de chaleur (3) comprend quatre premières conduites (31) sur quatre côtés non adjacents de la conduite interne (16) du premier module et quatre secondes conduites (36) disposées à la même distance angulaire sur quatre côtés supplémentaires non adjacents de la conduite interne (16) du premier module.

6. Dispositif (100) selon l'une quelconque des revendications précédentes, comprenant une bride antérieure (4) et une bride postérieure (5), respectivement disposées à une extrémité antérieure et à une extrémité postérieure dudit échangeur de chaleur (3) ; ladite bride antérieure (4) faisant écouler un flux d'air vers lesdites premières conduites (31) et obstruant un flux d'air vers lesdites secondes conduites (36) de l'échangeur de chaleur ; ladite bride postérieure (5) faisant écouler un flux d'air vers lesdites secondes conduites (36) et obstruant un flux d'air vers lesdites premières conduites (31) de l'échangeur de chaleur.

7. Dispositif (100) selon la revendication 6, où ladite bride postérieure (5) est dotée de conduites de communication (55) qui mettent en communication lesdites premières conduites (31) de l'échangeur de chaleur avec ladite seconde fente d'aération (G2) entre la conduite interne (16) du premier module et la conduite externe (14) du second module, et ladite bride antérieure (4) est dotée de conduites de communication (45) qui mettent en communication lesdites secondes conduites (36) de l'échangeur de chaleur avec les ouvertures (16a) de la conduite interne du premier module pour introduire de l'air dans ladite première conduite axiale (D1) du premier module.

8. Dispositif (100) selon l'une quelconque des revendications précédentes, comprenant un capteur de pression (6) branché à une unité de commande (7) pour envoyer des informations d'une valeur de pression de l'air dans l'environnement fermé ; ladite unité de commande (7) étant configurée de manière à régler la vitesse du premier ventilateur (V1) afin que sa vitesse soit supérieure à celle du second ventilateur (V2) pour augmenter la pression dans l'environnement fermé.

9. Dispositif (100) selon l'une quelconque des revendications précédentes, comprenant un capteur d'humidité, un capteur de température et un capteur de particules PM10 et PM2.5.
